Europäisches Patentamt

European Patent Office

Office européen des brevets

(19)

(11) **EP 1 349 328 A1**

(12) **EUROPEAN PATENT APPLICATION**

(43) Date of publication:
   **01.10.2003 Bulletin 2003/40**

(51) Int Cl.7: **H04L 12/56**

(21) Application number: **02007174.2**

(22) Date of filing: **28.03.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (71) Applicant: **SIEMENS AKTIENGESELLSCHAFT**<br>**80333 München (DE)**<br><br>(72) Inventor: **Raaf, Bernhard**<br>**81475 München (DE)** |

(54) **Data transfer method**

(57)   A data transfer method

- via a packet oriented channel and a continuous channel in parallel
- between a mobile station (MS) and a base station (BS),
- where the transfer via the continuous channel is interrupted whereby at least one transfer gap is formed.

# FIG 3

**EP 1 349 328 A1**

**Description**

**0. Scope of the invention**

The present invention relates to the interdependencies between compressed mode and data transfer, especially between compressed mode and data transfer via HSDPA (High Speed Downlink Packet Access), cf. [3].

**1. Introduction**

While a connection is established between a communication device or user equipment (UE) and a base station (BS or Node B), the user equipment also observes other base stations in order to find out the base station the optimum connection can be installed to.

For observing another base station, the user equipment has to tune in on frequencies distinct from its actual sending/ receiving frequencies. Thus during the time the user equipment is observing other frequencies, no data are being transmitted or received, at least if the user equipment has only one synthesiser and / or only one RF- part (RF: Radio Frequency).

However, the user of the user equipment should not notice, that his data transfer has been disrupted in order to create transfer gaps for so called 'inter-frequency measurements' [1]. Hence to maintain a constant average data rate, the net data transfer rate is increased before and after the transfer gaps. By 'net data' data actually carrying information are denoted. A certain overhead is added to the net data to ensure that the data can be decoded correctly at the receiver, even if the transmission has not been ideal, i.e. experiences some degradation. The overall data are referred to as gross data, the overhead of data may e.g. consist of parity bits. Data transfer may be either the transmission or the reception of data or both.

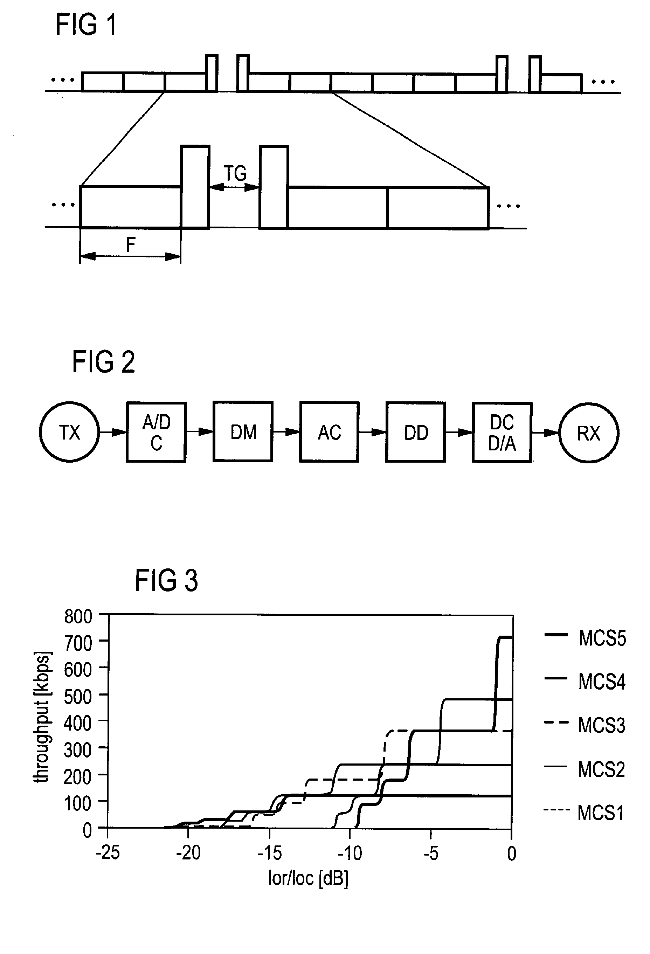

The situation of a transfer disrupted by a transfer gap TG, e.g. a transmission gap, is shown in Fig.1, which is taken from [1]: The transmit power is depicted versus time; the latter is segmented in frames F as time intervals, each frame itself contains several time slots. The frames during which the user equipment listens to an other base station and thus cannot be transferring data continuously are referred to as compressed frames, as the transfer rate has to be increased in some timeslots in this frame to achieve an average rate similar to normal frames, that is when the compressed mode is off.

So the frames, in which the data are transferred compressed, are referred to as compressed frames, the respective operating mode as compressed mode.

In compressed frames, TGL (transmission gap length) slots from a first slot $N_{first}$ to a last slot $N_{last}$ are not used for transmission of data. As illustrated in Fig. 1, the instantaneous transmit power is increased in the compressed frame before and after the transmission gap in order to keep the quality e.g. the BER (Bit Error Rate) or the FER (Frame Error Rate) unaffected by the reduced processing gain. The amount of power increase depends on the actually used transmission time reduction method (see [1], subclause 4.4.3).

Generally spoken, the transmit power is increased to ensure a safe transmission of the less safe encoded data: By coding the data less, with the same gross data transfer rate a higher net data transfer rate can be achieved. The data bits are e.g. punctuated more than in the frames before or the coding of the data bits has been performed with a lower spreading factor.

Which frames are compressed, is decided by the network. When in compressed mode, compressed frames can occur periodically or requested on demand. The rate and type of compressed frames is variable and depends on the environment and the measurement requirements.

This type of compressed mode is applied to the DPDCH (Dedicated Physical Data Channel), across which data are transferred by circuit switching. The above described methods for compressing the frames require rather complex calculations.

Also packet switched transfer modes are affected by the transmission gaps TG. In a packet switched transfer mode the data are segmented into packets. Each packet is transferred individually. The quality of the reception is decided on basis of various data operations such as demodulation or decoding (cf. Fig.2). The receiver sends back a receipt of the reception, e.g. an 'ACK' (Acknowledge) or a 'NACK' (Not acknowledge) depending whether it has recognised a packet as been received correctly or not. A channel with packet switched transfer mode is e.g. the HS-DSCH (High Speed Downlink Shared Channel), cf.[3].

The HS-DSCH is applied for HSDPA (High Speed Downlink Packet Access), which constitutes a high data transfer rate system with data rates ideally up to 10.8Mbps. Such a data rate would e.g. enable the download of videos etc.

The HS-DSCH is shared among several users. The respective transfer rate for each of the users is decided on basis of the individual channel quality. One of the multiple access possibilities is in the time domain, where different users can be scheduled every transmission time interval (TTI), which corresponds to three UMTS slots (UMTS: Universal Mobile Telecommunication System), that is 2ms.

In principle the above described compressed mode can be applied to packet switched data, too, cf. [2].

However a simpler process is desirable to make the calculations less complex.

**Short Description of the Invention**

It is an object of the invention to provide an easy solution to handle the interdependencies between compressed mode and a packet switched data transfer channel.

It is a further object of the invention, to provide a transmission method, where information is transmitted in packets, and where transmission or reception gaps are provided, whereby no transmission or reception is performed during transmission or reception gaps.

In a first embodiment, after the reception of a data packet no receipt, e.g. an 'ACK' or a 'NACK', is sent back by the receiver after a first processing time. The first processing time is often called UE-processing time and denotes the time between the end of reception of a signal and the start of transmission of a successive or subsequent signal, which may be an ACK or NACK signal as in the case of the UMTS system. In UMTS 5ms are allocated for the UE-processing time. The timing structure of HSDPA is shown in Fig.3, where also the length of 1 TTI can be seen, which corresponds to 2ms in UMTS.

During the first processing time the signal is e.g. demodulated, that is a set of symbols is assigned to a set of incoming data, and to allot a probability to each symbol or bit, that the decision for a symbol or bit has been correct.

By not sending a receipt during the transmission gap the gap is maintained despite of the HSDPA transmission and the gap can be used for the initially described observation of other frequencies.

In a second embodiment of the invention a data packet is stored by the receiver, e.g. in the receiver, thus representing a first data set. A decoding is done, when the data packet has been received repeatedly, thus at least a second data set is provided. By a joint decoding of the data sets the performance of the decoding process is improved in respect to decoding e.g. the first data set alone.

In a third embodiment of the invention the receipt is sent back after the processing time plus a certain delay. This also ensures, that no receipt is transferred in the transmission gap.

Thus it is another object of the invention to propose a method how to restrict the scheduling of HSDPA transmissions in order not to compromise compressed mode operation and still sacrifice as little data throughput, especially HSDPA throughput, as possible.

**Description of Figures and Embodiments**

Further aspects, features, objects and advantages of the invention will become more apparent from the detailed description set forth below, especially when taken in conjunction with the drawings wherein show:

Fig.1     a scheme of a compressed mode transmission

Fig.2     block diagram of transmission process

Fig.3     Throughput for HSDPA depending on the Modulation and coding scheme.

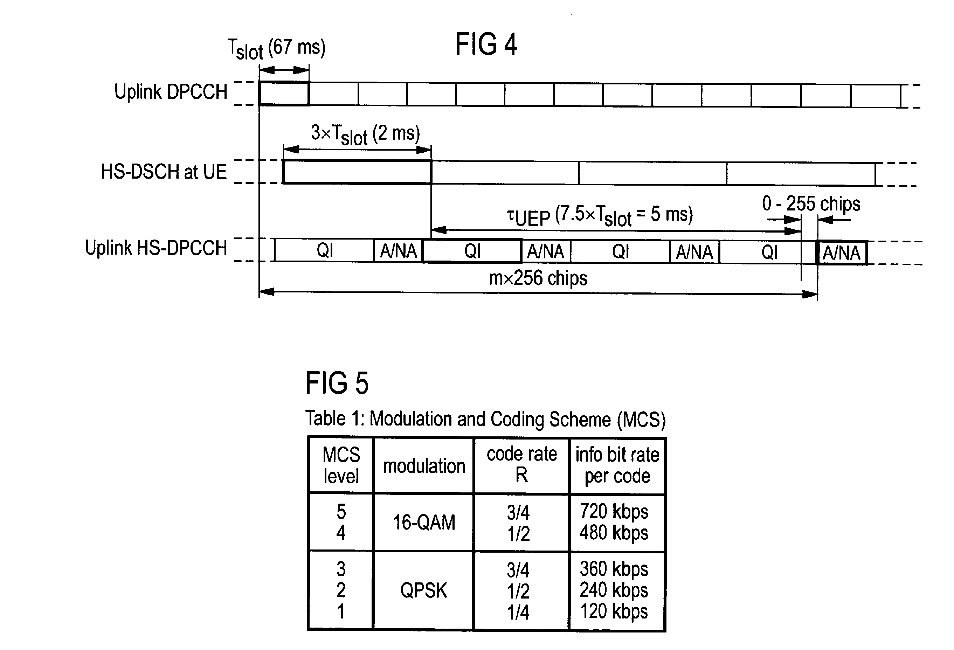

Fig.4     Timing structure of HSDPA uplink timing, from figure 13 of [3]. zeigt auch DSCH hat 3 TTIs also 2 ms, und Tau UEP = UE Processing time is 5ms.)

In Fig.2 an ordinary transmission sequence can be seen, which is used to explain the terms demodulation, coding etc.

The signal may be generated at the source or transmitter TX. In a subsequent analogue to digital converter A/D the signal is digitised, thus the smallest information carrying unit is one bit. Digitising includes e.g. the steps of sampling and quantising the signal. Then various coding steps in the encoder C are performed: source coding is performed to get rid of redundancies in the signal or digitised data are used directly (which means no A/D converting or source coding... needs to be done); channel coding is applied to protect the bits. After coding the signal is spread. Now the smallest information carrying unit is a chip. Due to spreading the chip rate for a transmission is typically considerably higher than the bit rate.

At the digital modulator DM the data are 'translated' into symbols that differ for the various modulation and coding schemes.

Now the data are being transferred and subject to noise and interference influences that can have an impact on the data. E.g. a previous symbol (1,1) at the digital demodulator might be changed to (0.7,0.9). Hence one speaks about a transfer via an analogous channel AC. At the receiving side the corresponding processes of demodulation at the digital demodulator DD and the decoding at the Decoder D and the digital to analogue conversion at the D/A converter are taking place.

For a thorough understanding of the invention's scope now it is differentiated between various applications of the compressed mode and its implications on the HSDPA transmission:

### 1. Restrictions on HSDPA transmission due to downlink compressed mode (cf. embodiment 1)

The restrictions which have to be accepted for (downlink) HSDPA transmission can be described as follows: During the transfer gaps provided by compressed mode, the user equipment is free to tune to other frequencies and therefore cannot receive any signals on its currently assigned frequency.

In general during the transfer gaps the user equipment needs not receive any signal. In other words, the base station may send signals during the transfer gap, but it cannot be assumed, that the signals are received by the user equipment.

Therefore for one embodiment this simple fact is specified, disregarding specific details of e.g. the offset of the DPCH against the HS-DSCH and HS-SCCH (High Speed Synchronisation Control Channel) or the specific details of the compressed mode patterns or the different frame structure types, as this is not necessary.

For any given offset and for given parameters of the compressed mode, it will be quite easy to calculate whether HS-SCCH or HS-SDCH overlap with the transfer gap. Note that an overlap is already given if any single chip of the HSDPA transmission would overlap with any single chip (see explanations to Fig.2) of the transfer gap. Furthermore, because the HI transmission (HI:HS-DSCH Indicator) always fully overlaps the corresponding HS-SCCH transmission (if the HI is transmitted at all, the system can also be designed without the HI), it is sufficient to consider only the latter.

In another embodiment the base station does not transmit any data in this case. While this will be the optimum solution if the base station knows that the user equipment does not listen during the time in question, this does not necessarily have to be the case. For example, if the transfer gap of the compressed mode only partially overlaps with a HSDPA TTI, then it may be possible for the user equipment to still receive parts of the TTI and, due to the error correcting coding which is applied, it might be possible to decode the data packet also from this partial reception. This is in particular possible, if the packet was already a retransmission, in this case it might be possible to decoded the packet based on the received information of the earlier transmission(s) plus that partial one. It may also be the case that successful decoding is not possible due to the part of the TTI that is missed during the gap, however, the received part of the TTI, together with a subsequent transmission may make it possible to decode the data.

Therefore, in an other embodiment, the user equipment receives at least part of the data even if the TTI (partly) overlaps with a transfer gap by compressed mode. The user equipment can then either perform a complete decoding or only store these data in the user equipment soft buffer (how this is done will be described in more detail in an other embodiment). In an other variant the user equipment may, at least for some transfer gaps, decide that it does not need to interrupt communication as long as the entire transfer gap, but only for a shorter time. This may be possible if the actions that are scheduled for a particular transfer gap can also be performed in this shorter time. This may be the case e.g., if the user equipment has a synthesiser that can be tuned to the other frequencies more quickly than was assumed when the requirements were decided. An other possibility is, that the action scheduled for a particular transfer gap can inherently be done in a shorter time, e.g. a so called BSIC-verification on an other GSM frequency (BSIC= Base Station Identification Code). This can be done in a rather short time, but the exact position of this time within the transfer gap may not be known at the base station when the transfer gap is being scheduled, so that a larger transfer gap is scheduled than will actually be necessary in the end.

### 2. Restrictions on HSDPA transmission due to uplink compressed mode (cf. e.g. second embodiment)

The restrictions due to uplink compressed mode are somewhat different, because it is not the downlink HSDPA transmission that is causing the trouble but the uplink sent receipt, e.g. the ACK/NACK (Acknowledge/Not acknowledge) transmission. Of course, during the transmission gaps for uplink compressed mode, the user equipment is not able (and therefore not requested) to transmit anything, in particular not a receipt. However, this does not rule out the possibility for the base station, which is also often called Node B, to transmit an associated downlink HSDPA transmission before the transfer gap.

The only restriction a base station has to take into account is the fact, that it cannot expect the user equipment to transmit any receipt, e.g. either ACK or NACK, in response to this HSDPA transmission. As a consequence, the base station will not get an information about whether the user equipment has correctly received the packet and will therefore have to retransmit the packet in any case. At first sight sending an HSDPA transmission in this case may look like a waste of resources, but actually the throughput can be increased: The base station will not use a MCS (Modulation an Coding Scheme) where there is a fair chance that the user equipment will decode the initial transmission, but it will use a MCS where the second transmission has such a fair chance.

A modulation and coding scheme describes in particular, which transmission method is being used for the packet, in particular the amount of redundancy that is used and that is available for error correction purposes (coding), and the modulation scheme which describes how many bits are transmitted with a single symbol. E.g. for QPSK (Quadrature Phase Shift Key) two bits are transmitted while for 16 QAM (Quadrature Amplitude Modulation) transmission 4 bits are transmitted. The code rate R describes how many redundancy is being used, R is defined as

R = Number of bits before of coding / Number of bits after coding

Table 1:

| Modulation and Coding Scheme (MCS) | | | |
|---|---|---|---|
| MCS level | modulation | code rate R | info bit rate per code |
| 5 | 16-QAM | 3/4 | 720 kbps |
| 4 | | 1/2 | 480 kbps |
| 3 | QPSK | 3/4 | 360 kbps |
| 2 | | 1/2 | 240 kbps |
| 1 | | 1/4 | 120 kbps |

The previous table gives an example of a possible set of Modulation and Coding Schemes that can be used and Fig. 3 shows the throughput that can be achieved depending on the channel quality for these Modulation and Coding Schemes.

The abscissa $I_{or}/I_{oc}$ is the ratio of the total power spectral density of the downlink to one user terminal to the power spectral density of the band limited noise and interference. $I_{or}/I_{oc}$ is defined as

$$\frac{I_{or}}{I_{oc}} = \frac{E_b}{N_0} \cdot \frac{R_b}{R_c} \cdot \frac{1}{g_d},$$

where $E_b / N_0$ is the bit energy to spectral noise density, $R_b$ is the bit rate, and $R_c$ is the chip rate. The factor $g_d$ is fraction of radiated power devoted to the HSDPA data channel. An total overhead of 20% is assumed (e.g., for signalling channels and pilot channels which are used to determine the influence of the transmission medium on the received signals by the user equipment) leading to $g_d$ = 0.8.

Thus the abscissa denotes basically the signal to noise ratio.

The steps in the throughput curves are caused if the initial transmission fails and a retransmission has to be done, which will make the throughput drop to the half for the second transmission, to a third for the third transmission and so on. As can be seen from the graph, after one retransmission a level 2 Modulation and Coding Scheme achieves a throughput of 129 kbps (kilo bits per second) after the second transmission, just as MCS level 1 for the first transmission, in a similar range of the channel quality. In that range the same throughput can be achieved with two transmissions of MCS level 2 as with a single transmission of MCS level 1.

Then of course the initial transmission will have a rather low success probability, which means the ACK/NACK signal that is 'lost', because it is not sent due to the uplink compressed mode transfer gap is most likely a NACK signal, so the information would be redundant.

Note that a scheduler, the control unit in the base station which decides which user equipment to serve during the next TTI and which MSC to use, is anyhow free to always use such an operating point or transfer mode, which also has the advantage of increased time diversity due to combination of two transmissions at different times. The throughput of a higher MCS with retransmission is very similar to the throughput of a MCS carrying half as much payload for an initial transmission. If this scheme is employed, uplink compressed mode does not degrade the throughput of a HSDPA session.

To recapitulate, the base station shall not schedule a HSDPA transmission for a user equipment which is using compressed mode, if part of the HS-SCCH information or the corresponding HS-DSCH TTI (TTI: Transmission Time Interval) overlaps with a transfer gap of downlink compressed mode.

If a part of an ACK/NACK signal overlaps with a transfer gap of uplink compressed mode, the user equipment is not requested to transmit it. Instead, the user equipment may discontinuously transmit (DTX: discontinuous transmission) the affected timeslot on the uplink HS-DPCCH. Further more the user equipment does not need to attempt to decode the transmitted packet, but is only requested to store the data of the corresponding HS-DSCH TTI in the virtual user equipment buffer to be able to combine them with data sent in subsequent TTIs.

The detailed operation of the scheduler in the base station will be vendor specific, and it also needs not to be specified totally in detail. Specific implementations of the scheduler can be done by those versed in the art in accordance with the rules set forward herein. All that needs to be specified, is the fact that the user equipment is not requested to transmit any receipt, e.g. a ACK/NACK signal, that overlaps an uplink compressed mode transfer gap. Note that again not even a single chip of overlap is allowed. As a consequence, it will be invisible from the outside, whether the user equipment could correctly decode the HSDPA transmission and therefore the user equipment does not even have to attempt to decode this packet, all it has to do is store the soft decision values in the virtual user equipment buffer where they will be combined with the next transmission which will then be processed as usual, including transmission of an ACK/NACK Signal. This is the intention behind the second embodiment, as described above.

### 3. Restrictions on QI transmission due to uplink compressed mode

Similar restrictions due to uplink compressed mode as for the receipt (e.g. ACK/NACK signal) affect also any other uplink HSDPA transmission, i.e. the Quality Indicator (QI) transmission.

The QI conveys information regarding the quality of the downlink channel as seen from the user equipment and is used by the base station to detect, which of the user equipments attached to a base station have a good reception and are therefore suited for HSDPA transmission.

Again, during the transfer gaps for uplink compressed mode, the user equipment is not able (and therefore not requested) to transmit anything, in particular not the QI transmission.

The QI transmission is intermittent or not continuous due to the measurement feedback cycle, even if it is possible to request the user equipment to transmit a QI in every TTI as a special case.

Further more the base station anyhow has to cope with corrupted or undecodable QI transmissions, so no special actions or provisions are expected to be necessary for the QI transmission, it can simply be omitted if there is a collision with an uplink compressed mode transfer gap. Note again that not even a single chip of overlap is allowed.

To summ up, the user equipment is not requested to transmit a Quality Indicator signalling, if a part of it overlaps with a transfer gap of uplink compressed mode. Instead the user equipment may simply not transmit anything during the affected timeslots on the uplink HS-DPCCH. This behaviour is also called DTX (Discontinuous Transmission).

### 4. Restrictions due to simultaneous uplink and downlink compressed mode

If both uplink and downlink compressed mode are activated at the same time, or if multiple compressed mode patterns are activated, then the restrictions due to the individual transfer gaps exist in parallel. This means a downlink or uplink transmission is only feasible, if it is compatible with all the transfer gaps. Thus any receipt is not to be sent in any transfer gap.

### Further aspects and embodiments

In the above text, it is proposed to simply not transmit an uplink transmission (any receipt, e.g. ACK or QI) if it would overlap with a transmission gap.

As a further embodiment, the affected transmission can also be delayed until a time, when it is possible to do the transmission. The delay can in principle take any value, e.g. the delayed transmission could start immediately after the end of the transfer gap. However, in order to ease the implementation, it may be more desirable to delay the transmission by an integer number of timeslots. In case that more than one data packet has been transmitted during a compressed mode operation, that is more than one receipt is being delayed, the individual receipts are sent after the delay with an interval of one timeslot instead of one TTI to catch up for the delay faster than it would be the case with an interval of one or more TTIs.

In another embodiment of the invention, the delayed transmission is not delayed by an integer number of timeslots, but by an integer number of TTIs. This will ease the implementation at both the user equipment and base station, because the delayed transmission will then be received at a time when this type of transmission is anyhow due. Therefore the entire transmission respectively reception chain can be easier implemented. At first sight delaying for the next TTI instead of slot looks like introducing yet another delay. However, the entire system is designed and implemented that it works optimum for the given delays, i.e. when the transmission is sent at the nominal time. Any further delay will mean, that the action which is done in response to the ACK/NACK or the QI will not be possible any more at the time without any delay, but only at a later TTI. This action will in particular be the scheduling decision on the next TTI, i.e. which user equipment to transmit user data, which modulation and coding scheme to use and whether to transmit a new packet or to repeat an old one. If the ACK/NACK command is delayed by an integer number of TTIs, then obviously the mentioned response can also only be sent an integer number of TTIs later. If the delay is however less, i.e. an integer number of TTIs minus a fraction of a TTI, then the response can not be sent one entire TTI earlier, because the ACK/NACK came after the 'deadline' for that TTI. In other words, trying to optimise the delay of a transmission of an ACK/NACK (likewise for the QI which also influences subsequent transmissions) by a fraction of a TTI is pointless. As the implementation of the delay of an integer number of TTIs is easier, that should therefore be preferred.

The latter is particularly the case if there is simultaneously a transfer gap in both uplink and downlink compressed mode, because the backlog of the outstanding ACK/NACK signals which was built up before the transfer gap can be finished after the transfer gap before new ACK/NACK signals associated with HSDPA transmissions after the transfer gap have to be transmitted. Basically the reason for this is that the HSDAP downlink transmission is longer than the ACK/NACK transmission, therefore the transfer gap necessarily blocks at least as many downlink transmissions as ACK/NACK transmissions. However, in uplink only compressed mode, i.e. if there are Gaps only in the uplink direction, this is not the case because no downlink frames are blocked. In order to avoid a backlog also in this case, it is proposed to simply not transmit the ACK/NACK signal or, alternatively, to transmit the ACK/NACK signal with a delay which is not necessarily a multiple of a TTI. Still from an implementation point of view it is desirable to select a multiple of a timeslot. For the same reasons as detailed above it is not advantageous to select a delay which is not a multiple of a timeslot: None of the transmitted ACK/NACK signals would be received earlier than a fraction of a timeslot earlier compared to the slot aligned case. As has been detailed above, even a delay reduction of a fraction of a TTI is not beneficial for the system, this argument of course in particular applies for a fraction of a timeslot.

In a further embodiment the delay can be set to be a multiple of slots which is not at the same time a multiple of a TTI. In this way it can be avoided that delayed ACK/NACK transmissions block the timeslots which are allocated for current ACK/NACK transmissions which would then themselves have to be delayed.

In a further embodiment, only every second TTI can be used for transmission of delayed ACK/NACK signals, together with a new ACK/NACK signal which needs not to be delayed, leaving two timeslots of every other frame available for QI transmission.

In an even further embodiment, it is proposed to transmit first one or several delayed ACK/NACK transmission after the transfer gap, subsequently followed by QI transmission, in particular if a QI transmission would also have been scheduled during the transfer gap or during a delayed ACK/NACK signal.

In another embodiment, ACK/NACK and/or QI transmissions are sent after the transfer gap, possibly at a time when other ACK/NACK signals or QI transmissions would be scheduled. In this case these latter transmissions are also delayed, until they can be sent.

In a different embodiment, ACK/NACK transmission is prioritised over QI transmission, i.e. if both an ACK/ NACK signal is pending and a QI transmission the latter is further delayed and the pending ACK/NACK is transmitted before of the QI transmission.

In a further embodiment, only a single QI transmission is sent if a QI transmission has been delayed until the nominal transmission time of a later QI transmission. Instead of transmitting two or more QI transmissions one after the other, it may be sufficient to send only one QI. Transmitting two QIs in short succession will anyhow be redundant, because the channel quality will not have changed significantly during such a short time.

In a further embodiment, a QI transmission which cannot be sent at its nominal time due to a compressed mode transfer gap is delayed until a timeslot also allocated for QI transmission. Note that normally no QI may be sent during this particular timeslot because QI transmission is only done intermittently). Basically this means that the QI transmission is delayed by an integer number of TTIs rather than an integer number of timeslots.

The invention has been described in relation to HSDPA and compressed mode, however, as will be apparent to those skilled in the art, the same principles can easily be applied to other systems or scenarios, where a packet communication is established, but some time intervals are not available for uplink or downlink communication due to constraints from other aspects of the system. Such constraints can come from an other communication e.g. a circuit switched connection which runs in parallel. It can also be another system, which runs in parallel and is incompatible due to some reasons with the packet transfer and therefore causes some time intervals not to be available for the packet transfer. Such other system can be another communication system, which competes for some limited resources e.g. a receiver or causes mutual interference. It can also be a completely different action, which competes for e.g. energy sources or computing resources or other resources.

**5. References**

[1] R1-02-0492 TR 25.212v4.3, section4.4 'compressed mode' with Fig. 11

[2] R1-02-0034, Samsung, 'Interaction between compressed mode and HSDPA', Espoo, Finland, Jan. 2002

[3] R1-02-0199, TR 25.858 'High Speed Downlink Packet access', Espoo, Finland, January, 2002

The cited documents are maintained by 3GPP, the third generation partnership project, Address: ETSI, Mobile Competence Centre, 650, route des Lucioles, 06921 Sophia-Antipolis Cedex and are cited in the format used by this organisation.

**Claims**

1. A data transfer method

   - for transferring data via a packet oriented channel and a continuous channel in parallel
   - between a mobile station (MS) and a base station (BS),
   - where the transfer via the continuous channel is interrupted whereby at least one transfer gap is formed.

2. Data transfer method according to claim 1, **characterised in that**, the transfer gap is formed by an interruption of the reception at the mobile station.

3. Data transfer method according to any of the previous claims, **characterised in that**, the transfer gap is formed by an interruption of the transmission of the mobile station.

4. Data transfer method according to any of the previous claims comprising the following steps:

   - Sending a packet via the packet oriented channel
   - Storing information obtained from the received data packet
   - without sending a receipt after a first processing time.

5. Data transfer method according to claim 4, **characterised in that** a receipt is sent after a delay.

6. Data transfer method according to claim 5, **characterised in that**, the delay is such, that the receipt is sent immediately after the transfer gap.

7. Data transfer method according to claim 5, where the delay has the length of an integer number of time slots.

8. Data transfer method according to claim 5, where the delay has the length of an integer number of transmission time intervals (TTI) .

9. Data transfer method according to claim 4, comprising the following steps:

   - Receiving a second data packet,
   - Storing information obtained from the received second data packet
   - Performing a decoding making use of at least part of the information of each data packet.

10. Data transfer method according to any of the previous claims, where the packet oriented channel is a High Speed Downlink Shared Channel.

11. Data transfer method according to any of the previous claims, where the certain time, the data transfer is interrupted, is determined by the base station or the mobile station.

12. Data transfer method, comprising the following steps:

   - transferring information in packets,
   - providing transfer gaps,
   - performing data transfer only outside the transfer gaps.

FIG 1

FIG 2

FIG 3

## FIG 4

$T_{slot}$ (67 ms)

Uplink DPCCH

$3 \times T_{slot}$ (2 ms)

HS-DSCH at UE

$\tau_{UEP}$ (7.5 × $T_{slot}$ = 5 ms)   0 - 255 chips

Uplink HS-DPCCH

| QI | A/NA | QI | A/NA | QI | A/NA | QI | A/NA |

m×256 chips

## FIG 5

Table 1: Modulation and Coding Scheme (MCS)

| MCS level | modulation | code rate R | info bit rate per code |
|---|---|---|---|
| 5 | 16-QAM | 3/4 | 720 kbps |
| 4 | | 1/2 | 480 kbps |
| 3 | QPSK | 3/4 | 360 kbps |
| 2 | | 1/2 | 240 kbps |
| 1 | | 1/4 | 120 kbps |

EP 1 349 328 A1

European Patent Office

**EUROPEAN SEARCH REPORT**

Application Number

EP 02 00 7174

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | "CHANGES TO SOURCE CODING AND MULTIPLEXING FOR HS-DSCH" 3GPP TSG RAN WG1 MEETING #24, R1-02-0250, CHANGE REQUEST, [Online] - 22 February 2002 (2002-02-22) pages 1-70, XP002224779 ORLANDO, USA Retrieved from the Internet: <URL:www.quintillion.co.jp/3GPP/TSG_RAN/TSG_RAN2002/ TSG_RAN_WG1_RL1_02.html> [retrieved on 2002-12-11] | 1-4,9-11 | H04L12/56 |
| Y | * page 41, line 14 - page 42, line 10 * * page 43, line 10 - page 45, line 8 * * page 50, line 1 - page 63, line 19 * --- | 5-8 | |
| X | "Interaction of compressed mode with HSDPA" TSG-RAN WORKING GROUP 1 #24, TDOC R1-02-0279, [Online] - 22 February 2002 (2002-02-22) pages 1-3, XP002224780 ORLANDO, FLORIDA, USA Retrieved from the Internet: <URL:www.quintillion.co.jp/3GPP/TSG_RAN/TSG_RAN2002/ TSG_RAN_WG1_RL1_04.html> [retrieved on 2002-12-11] * page 1, line 1 - line 13 * * page 2, line 18 - line 21 * * page 2, line 34 - line 36 * * page 3, line 10 - line 20 * --- -/-- | 1,12 | TECHNICAL FIELDS SEARCHED (Int.Cl.7) H04L H04Q H04J |

The present search report has been drawn up for all claims

| Place of search | Date of completion of the search | Examiner |
|---|---|---|
| THE HAGUE | 13 December 2002 | Heinrich, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 02 00 7174

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | "HS-DPCCH and compressed mode" 3GPP TSG RAN WG1#24, TDOC R1-02-0355, [Online] - 22 February 2002 (2002-02-22) pages 1-2, XP002224781 ORLANDO, FLORIDA, USA Retrieved from the Internet: <URL:www.quintillion.co.jp/3GPP/TSG_RAN/TSG_RAN2002/ TSG_RAN_WG1_RL1_02.html> [retrieved on 2002-12-11] * the whole document * | 5-8 | |
| A | WO 01 20942 A (ERICSSON TELEFON AB L M) 22 March 2001 (2001-03-22) * page 10, line 9 - line 20 * * page 11, line 13 - page 12, line 5 * * page 32, line 5 - page 39, line 4 * | 1-12 | |
| A | EP 1 091 515 A (MITSUBISHI ELECTRIC TELECOM EU) 11 April 2001 (2001-04-11) * page 2, line 1 - line 30 * * page 9, line 10 - line 49 * | 1-12 | TECHNICAL FIELDS SEARCHED (Int.Cl.7) |

The present search report has been drawn up for all claims

| Place of search | Date of completion of the search | Examiner |
|---|---|---|
| THE HAGUE | 13 December 2002 | Heinrich, D |

## ANNEX TO THE EUROPEAN SEARCH REPORT
## ON EUROPEAN PATENT APPLICATION NO.

EP 02 00 7174

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2002

| Patent document cited in search report | | Publication date | Patent family member(s) | | Publication date |
|---|---|---|---|---|---|
| WO 0120942 | A | 22-03-2001 | AU | 7568400 A | 17-04-2001 |
| | | | CZ | 20020953 A3 | 14-08-2002 |
| | | | EP | 1212918 A1 | 12-06-2002 |
| | | | WO | 0120942 A1 | 22-03-2001 |
| EP 1091515 | A | 11-04-2001 | FR | 2799322 A1 | 06-04-2001 |
| | | | FR | 2799323 A1 | 06-04-2001 |
| | | | CN | 1297293 A | 30-05-2001 |
| | | | EP | 1091515 A1 | 11-04-2001 |
| | | | JP | 2001177877 A | 29-06-2001 |

EPO FORM P0459

For more details about this annex : see Official Journal of the European Patent Office, No. 12/82